# EUROPEAN PATENT APPLICATION

(11) **EP 2 644 011 A1**
(43) Date of publication of application: **02.10.2013**
(21) Application number: 13161030.5
(22) Date of filing: 26.03.2013
(51) Int. Cl.: A01B 31/00, E02F 3/84

(54) **Earth working apparatus**

(30) Priority: 26.03.2012 NL 2008539
(71) Applicant: Bos Konstruktie- en Machinebouw B.V., 8701 PG Bolsward (NL)
(72) Inventor: Bos, Greorgius Rudolphius, 8701 KM Bolsward (NL)
(74) Representative: van Oeffelt, Abraham

(57) **Abstract**

The present invention relates to a device for levelling a land surface, comprising a (scraping or grading) blade (2) suspended from a first suspension point (3a) and a second suspension point (3b), a hydraulic circuit with a coupling for feed and discharge of hydraulic liquid under pressure, a first hydraulic cylinder (5a) connected to the hydraulic circuit for defining the height (4a) of the first suspension point (3a) relative to the land surface (7), a second hydraulic cylinder (5b) connected to the hydraulic circuit for defining the height (4b) of the second suspension point (3b) relative to the land surface (7), wherein the first and second hydraulic cylinders (5a,5b) are placed in a master-slave arrangement and wherein the hydraulic circuit is provided with a controllable bypass (18) around the second hydraulic cylinder (5b) in order to enable individual control of the first hydraulic cylinder (5a), and thereby of the relative height of the first and second suspension points (3a,3b).

## Description

The present invention relates to a device for levelling or evening out a land surface, also referred to as scraping or grading.

It is known to level land surface by means of scraping or grading, wherein use is made of a (scraping or grading) blade. This blade is moved over the land surface for levelling, wherein it is usually attached to a trailer for a tractive vehicle.

Because such a trailer and/or such a tractive vehicle itself also travels over the land surface for levelling, the height of the blade relative to the vehicle or the trailer has to be continuously adapted in order to achieve a level end result. It may also be necessary to continuously adjust the inclination of the blade.

Diverse techniques are known for this purpose. It is particularly known to provide a (scraping or grading) blade suspended from a first suspension point and a second suspension point, a hydraulic circuit with a coupling for feed and discharge of hydraulic liquid under pressure, a first hydraulic cylinder connected to the hydraulic circuit for defining the height of the first suspension point relative to the land surface and a second hydraulic cylinder connected to the hydraulic circuit for defining the height of the second suspension point relative to the land surface. Control of the hydraulic cylinders takes place here manually or using laser or GPS equipment arranged as reference on the land for levelling.

An example of a known system is described in the American patent application US 2008/000659. The system comprises two cylinders which are controlled separately, either by a controller on the basis of a signal generated by an inclinometer, or manually.

Manual control of the two cylinders is however not always found to have the desired effect, and the solution with lasers is complicated and often also fails to serve its purpose when the distance increases. The present invention therefore has for its object to provide an alternative to the known systems which at least partially obviates the above stated drawbacks.

The invention provides for this purpose a device for levelling a land surface, comprising a (scraping or grading) blade suspended from a first suspension point and a second suspension point, a hydraulic circuit with a coupling for feed and discharge of hydraulic liquid under pressure, a first hydraulic cylinder connected to the hydraulic circuit for defining the height of the first suspension point relative to the land surface, and a second hydraulic cylinder connected to the hydraulic circuit for defining the height of the second suspension point relative to the land surface, wherein the first and second hydraulic cylinders are placed in a master-slave arrangement and wherein the hydraulic circuit is provided with a controllable bypass around the second hydraulic cylinder in order to enable individual control of the first hydraulic cylinder, and thereby of the relative height of the first and second suspension points.

The device according to the invention makes it possible to displace the (scraping or grading) blade in the height from a control location by means of regulating the hydraulic pressure. The control location is in practice usually a tractor cab equipped with operating means for controlling hydraulic pressure for peripheral equipment. Owing to the controllable bypass it is possible - when this bypass is switched off - to control the height of the grading blade with the operating means so that control of the device according to the invention is exceptionally simple for most regular operations. When the inclination has to be adjusted, i.e. when the heights of the first suspension point and the second suspension point must differ, use can be made for this purpose of the controllable bypass.

The device according to the invention may be directly attached to an agricultural vehicle such as a tractor but may also be configured for (releasable) coupling to a vehicle such as a tractor. It can particularly be embodied as a trailer for an agricultural vehicle, wherein the first and second hydraulic cylinders are connected to respectively a first and second set of wheels of the trailer which are connected to the first and second suspension point. Operating the hydraulic cylinders, and thereby the sets of wheels, makes it possible to define the relative height of the blade relative to the ground surface at these points, and thereby the inclination of the blade and, in the case of simultaneous operation, the height.

In an embodiment as trailer the coupling for feed and discharge of hydraulic liquid under pressure is configured for coupling to a hydraulic pressure connection of the vehicle. Tractors and similar vehicles are generally provided with a standardized hydraulic connection for equipment to be connected thereto. In addition to a switch for switching the hydraulic pressure on and off, the hydraulic circuit preferably also comprises a reversing switch for reversing the flow direction of the hydraulic liquid.

When the hydraulic system is provided with one controllable bypass, the control takes place in relatively simple manner and the system is robust and not unnecessarily complex. More freedom of control and a simpler control can however be achieved by also providing the hydraulic circuit with a controllable bypass around the first hydraulic cylinder in order to enable individual control of the second hydraulic cylinder, and thereby of the relative height of the first and second suspension points. In this way it is not necessary to perform multiple control operations for separate control of the second hydraulic cylinder.

The first and optionally second controllable bypass are preferably remotely controllable, in particular by means of a hydraulic or electric actuator. It is further possible to expand the system with a third and fourth hydraulic cylinder, which can be incorporated in the hydraulic system in similar manner to the first and the second cylinder.

The invention will now be elucidated with reference to the following figures. Herein:
- Figure 1 shows a first embodiment of a device according to the present invention;
- Figure 2 shows a second embodiment of a device according to the present invention; and
- Figure 3 shows a schematic representation of a first embodiment of the hydraulic circuit of the embodiments of figure 1 and figure 2; and
- Figure 4 shows a schematic representation of a second embodiment of the hydraulic circuit of the embodiments of figure 1 and figure 2.

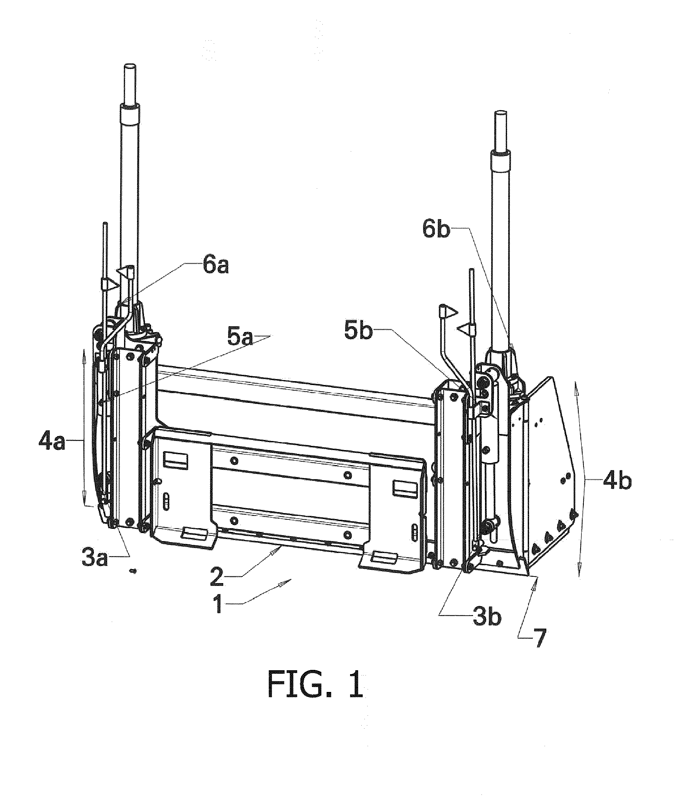

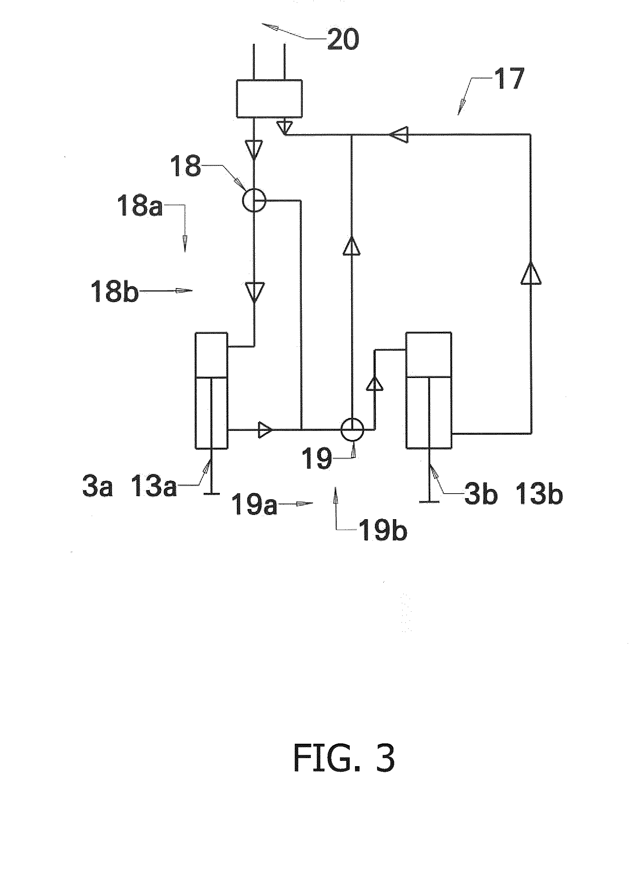

Figure 1 shows a first embodiment 1 of a device according to the present invention. The device comprises a grading blade 2 with fold-out parts 2a, 2b suspended from a first suspension point 3a and a second suspension point 3b. The device is provided with a hydraulic circuit (to be further elucidated with reference to figure 3) with a coupling for feed and discharge of hydraulic liquid under pressure, to which are connected a first hydraulic cylinder 5a connected to the hydraulic circuit for the purpose of defining the height 4a of the first suspension point 3a relative to land surface 7 and a second hydraulic cylinder 5b connected to the hydraulic circuit for the purpose of defining the height 4b of the second suspension point 3b relative to land surface 7.

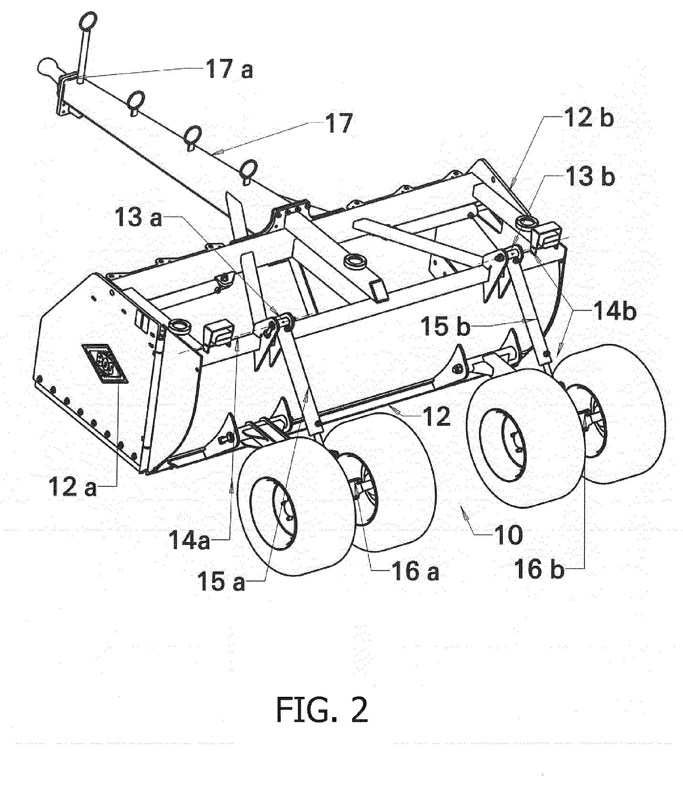

Figure 2 shows a second embodiment 10 of a device according to the present invention. This second embodiment 10 is configured for coupling to a vehicle such as a tractor (not shown). Device 10 corresponds substantially to device 1 of figure 1, albeit that it comprises a trailer for coupling to the vehicle, wherein the first and second hydraulic cylinders 13a, 13b are connected to respectively a first and second set of wheels 16a, 16b connected to the first and second suspension point. The device comprises a grading blade 12 with fold-out parts 12a, 12b suspended from a first suspension point 13a and a second suspension point 13b. The device is provided with a hydraulic circuit 17 (to be further elucidated with reference to figure 3) with a coupling 17a for feed and discharge of hydraulic liquid under pressure, to which are connected a first hydraulic cylinder 15a connected to the hydraulic circuit for the purpose of defining the height 14a of the first suspension point 13a relative to land surface 7 and a second hydraulic cylinder 15b connected to the hydraulic circuit for the purpose of defining the height 14b of the second suspension point 13b relative to land surface 7. On their sides remote from the grading blade the hydraulic cylinders 15a, 15b have a connection 16a, 16b to the vehicle to which the device is attached. The first and second hydraulic cylinders 15a, 15b are placed in a master-slave arrangement so that the heights 14a, 14b can be controlled simultaneously, although the hydraulic circuit is also provided with a controllable bypass (see figure 3) around the second hydraulic cylinder 15b so as to enable individual control of the first hydraulic cylinder 15a, and thereby of the relative height of the first and second suspension points 13a, 13b, and thus enable adjustment of the angle alpha formed by blade 12 relative to ground surface 7.

Figure 3 shows a schematic representation of hydraulic circuit 17 of the embodiments of figure 1 and figure 2. The circuit comprises a hydraulic coupling 20 for a vehicle which is provided with a reversing switch 20a for reversing the direction of the hydraulic flow. The circuit successively comprises an optional second bypass 18, a first hydraulic (master) cylinder 3a, 13a, a first bypass 19 and a second hydraulic (slave) cylinder 3b, 13b. First bypass 19 and second bypass 18 can for instance be electrically controllable bypasses which can in practice each be constructed as a single unit or can be assembled from a plurality of valves or actuators. It is of course also possible to envisage a manually controllable bypass in a simple embodiment of the invention.

When the optional bypass 18 is absent, cylinder 3a, 13a can be operated by means of feeding hydraulic liquid. When the controllable bypass 19 is in position 19a, second cylinder 3b, 13b co-displaces with the first, and the two cylinders operate in master-slave relation. The height of the grading blade can in this way be adjusted. When bypass 19 is in position 19b, the hydraulic liquid is carried along second cylinder 3b, 13b which remains stationary while the first cylinder moves. The angle alpha at which the grading blade lies relative to the ground surface can in this way be adjusted. The optional second bypass 18 can also be applied if it is also desired to enable adjustment of second cylinder 3b, 13b without co-displacement of the first.

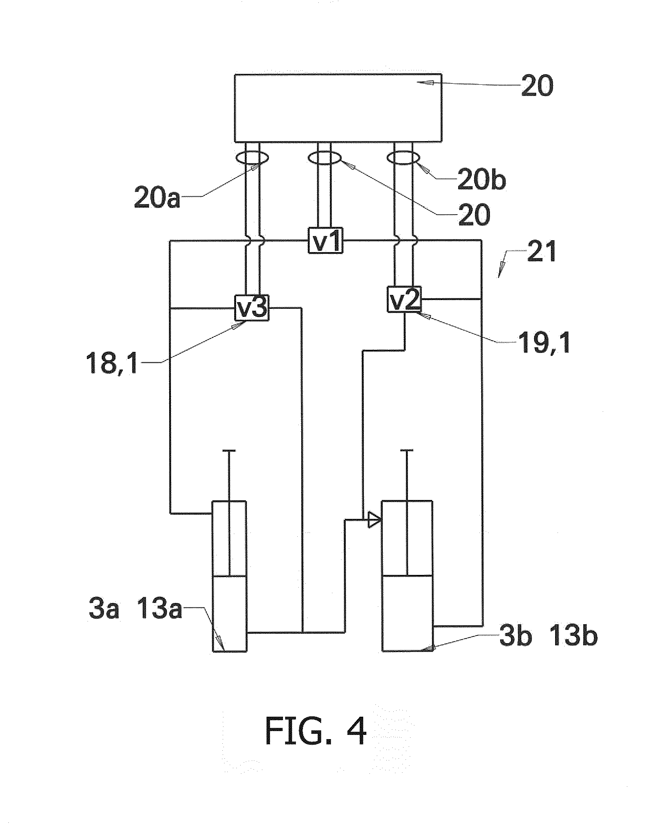

Figure 4 shows an alternative embodiment of the hydraulic circuit in which the hydraulic coupling is provided with additional controllable liquid feeds and discharges 20a, 20b. The bypasses are in this way hydraulically controllable by feeding or discharging oil under pressure. In addition to the shown variants with two cylinders, add-ons to four or more cylinders are also possible, wherein the cylinders are optionally each provided with bypasses. Further possible embodiments are deemed to fall within the scope of protection of the following claims.

## Claims

1. Device for levelling a land surface, comprising:
- a (scraping or grading) blade suspended from a first suspension point and a second suspension point;
- a hydraulic circuit with a coupling for feed and discharge of hydraulic liquid under pressure;
- a first hydraulic cylinder connected to the hydraulic circuit for defining the height of the first suspension point relative to the land surface;
- a second hydraulic cylinder connected to the hydraulic circuit for defining the height of the second suspension point relative to the land surface;
**characterized in that**
- the first and second hydraulic cylinders are placed in a master-slave arrangement; wherein
- the hydraulic circuit is provided with a controllable bypass around the second hydraulic cylinder in order to enable individual control of the first hydraulic cylinder, and thereby of the relative height of the first and second suspension points.

2. Device as claimed in claim 1, configured for coupling to a vehicle such as a tractor.

3. Device as claimed in claim 2, wherein the device comprises a trailer, and wherein the first and second hydraulic cylinders are connected to respectively a first and second set of wheels connected to the first and second suspension point.

4. Device as claimed in claim 3, wherein the coupling for feed and discharge of hydraulic liquid under pressure is configured for coupling to a hydraulic pressure connection of the vehicle.

5. Device as claimed in any of the foregoing claims, wherein the hydraulic circuit comprises a reversing switch for reversing the flow direction of the hydraulic liquid.

6. Device as claimed in any of the foregoing claims, wherein the hydraulic circuit is provided with a controllable bypass around the first hydraulic cylinder in order to enable individual control of the second hydraulic cylinder, and thereby of the relative height of the first and second suspension points.

7. Device as claimed in any of the foregoing claims, wherein the controllable bypass is remotely controllable, in particular by means of a hydraulic or electric actuator.

8. Device as claimed in any of the foregoing claims, comprising a third and a fourth hydraulic cylinder for controlling the height of a third and fourth suspension point.
